# EUROPEAN PATENT APPLICATION

(11) **EP 4 604 027 A1**
(43) Date of publication of application: **20.08.2025**
(21) Application number: 23876602.6
(22) Date of filing: 08.10.2023
(51) Int. Cl.: G06N 20/00

(54) **MODEL REQUEST METHOD AND APPARATUS, COMMUNICATION DEVICE, AND READABLE STORAGE MEDIUM**

(30) Priority: 12.10.2022 CN 202211250071
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN); CHONG, Weiwei, Dongguan, Guangdong 523863 (CN)
(74) Representative: Walaski, Jan Filip
(86) International application number: PCT/CN2023/123317
(87) International publication number: WO 2024/078400

(57) **Abstract**

The present application relates to the technical field of wireless communications, and discloses a model request method and apparatus, a communication device, and a readable storage medium. The model request method of embodiments of the present application comprises: a first communication device sends a first request, the first request being used for requesting a plurality of models for one or more data analysis tasks; and the first communication device receives a first response, the first response comprising related information of the plurality of models that satisfy the first request.

## Description

### CROSS-REFERENCE TO RELATED APPLICATIONS

This application claims priority to Chinese Patent Application No. 202211250071.8, filed in China on October 12, 2022, which is incorporated herein by reference in its entirety.

### TECHNICAL FIELD

This application pertains to the field of wireless communication technologies, and specifically relates to a model request method and apparatus, a communication device, and a readable storage medium.

### BACKGROUND

In a communication network in the related art, a model receive end may request a trained model from a model transmit end when it is necessary to perform data analytics. Currently, the model receive end can request only one model from the model transmit end at a time. If a plurality of models are needed at the same time, a plurality of pieces of signaling need to be sent, resulting in an increase of network load or other problems.

### SUMMARY

Embodiments of this application provide a model request method and apparatus, a communication device, and a readable storage medium to resolve a problem that a model receive end can request only one model from a model transmit end at a time.

According to a first aspect, a model request method is provided and includes:
sending, by a first communication device, a first request, where the first request is used to request a plurality of models for one or more data analytics tasks; and
receiving, by the first communication device, a first response, where the first response includes related information of a plurality of models meeting the first request.

According to a second aspect, a model request method is provided and includes:
receiving, by a second communication device, a first request, where the first request is used to request a plurality of models for one or more data analytics tasks;
obtaining, by the second communication device, a plurality of models meeting the first request; and
sending, by the second communication device, a first response, where the first response includes related information of the plurality of models.

According to a third aspect, a model request apparatus is provided and includes:
a first sending module, configured to send a first request, where the first request is used to request a plurality of models for one or more data analytics tasks; and
a first receiving module, configured to receive a first response, where the first response includes related information of a plurality of models meeting the first request.

According to a fourth aspect, a model request apparatus is provided and includes:
a first receiving module, configured to receive a first request, where the first request is used to request a plurality of models for one or more data analytics tasks;
an obtaining module, configured to obtain a plurality of models meeting the first request; and
a first sending module, configured to send a first response, where the first response includes related information of the plurality of models.

According to a fifth aspect, a communication device is provided. The communication device includes a processor and a memory. The memory stores a program or instructions capable of running on the processor. When the program or instructions are executed by the processor, the steps of the method according to the first aspect or the second aspect are implemented.

According to a sixth aspect, a communication device is provided and includes a processor and a communication interface. The communication interface is configured to: send a first request, where the first request is used to request a plurality of models for one or more data analytics tasks; and receive a first response, where the first response includes related information of a plurality of models meeting the first request.

According to a seventh aspect, a communication device is provided and includes a processor and a communication interface. The communication interface is configured to: receive a first request, where the first request is used to request a plurality of models for one or more data analytics tasks; the processor is configured to obtain a plurality of models meeting the first request; and the communication interface is further configured to send a first response, where the first response includes related information of the plurality of models.

According to an eighth aspect, a communication system is provided and includes a first communication device and a second communication device. The first communication device may be configured to perform the steps of the model request method according to the first aspect. The second communication device may be configured to perform the steps of the model request method according to the second aspect.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communication interface. The communication interface is coupled to the processor. The processor is configured to run a program or instructions to implement the method according to the first aspect or implement the method according to the second aspect.

According to an eleventh aspect, a computer program or program product is provided. The computer program or program product is stored in a storage medium. The computer program or program product is executed by at least one processor to implement the steps of the model request method according to the first aspect or the second aspect.

In the embodiments of this application, the first communication device can request a plurality of models at a time, to reduce signaling consumption in a network.

### BRIEF DESCRIPTION OF DRAWINGS

FIG. 1 is a block diagram of a wireless communication system to which an embodiment of this application may be applied;
FIG. 2 is a schematic diagram of signaling interaction between an NWDAF containing an AnLF and an NWDAF containing an MTLF;
FIG. 3 is a first schematic flowchart of a model request method according to an embodiment of this application;
FIG. 4 is a second schematic flowchart of a model request method according to an embodiment of this application;
FIG. 5 is a third schematic flowchart of a model request method according to an embodiment of this application;
FIG. 6 is a fourth schematic flowchart of a model request method according to an embodiment of this application;
FIG. 7 is a first schematic diagram of a structure of a model request apparatus according to an embodiment of this application;
FIG. 8 is a second schematic diagram of a structure of a model request apparatus according to an embodiment of this application;
FIG. 9 is a schematic diagram of a structure of a communication device according to an embodiment of this application;
FIG. 10 is a schematic diagram of a hardware structure of a terminal according to an embodiment of this application;
FIG. 11 is a first schematic diagram of a hardware structure of a network-side device according to an embodiment of this application; and
FIG. 12 is a second schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

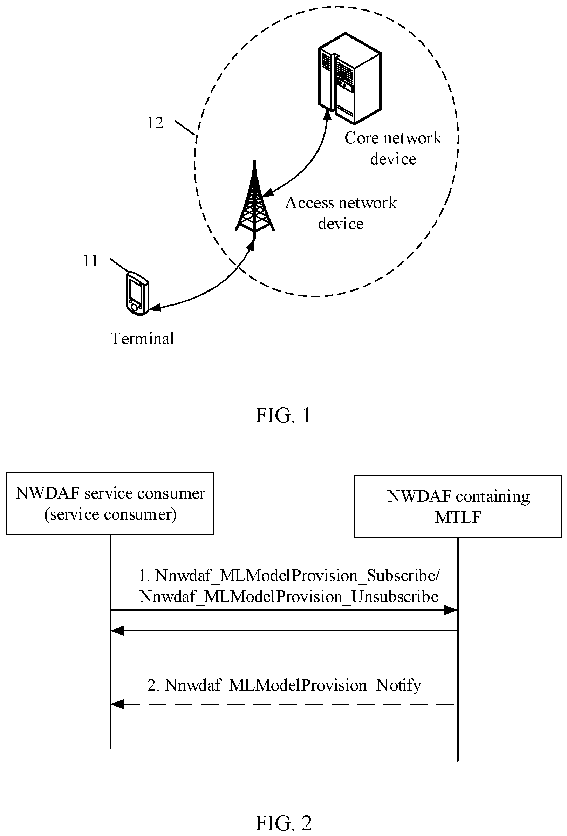

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

The following first briefly describes technical points involved in this application.
1. A network data analytics function (Network Data Analytics Function, NWDAF) may be split into two network elements as follows:
   an NWDAF, which contains a model training logical function (Model Training Logical Function, MTLF) and is configured to generate and train a model; and
   an NWDAF, which contains an analytics logical function (Analytics Logical Function, AnLF) and is configured to perform inference based on the obtained model to generate predictive information or generate a summary of historical data.

Refer to step 1 in FIG. 2.

By invoking an Nnwdaf_MLModelProvision_Subscribe/Nnwdaf _MLModel Provision_Unsubscribe service operation, an NWDAF service consumer (that is, a NWDAF containing an AnLF) subscribes to, modifies a subscription to, or unsubscribes from a set of training machine learning (Machine Learning, ML) models (which may also be referred to as artificial intelligence (Artificial Intelligence, AI) models) associated with a set of analytics (Analytic) identifiers (Identification, ID).

When receiving a subscription to an ML model associated with an analytics ID, the NWDAF containing the MTLF can:
determine whether an existing trained ML model can be used for the subscription; or
determine whether further training needs to be triggered for an existing trained ML model.

If the NWDAF containing the MTLF determines that further training is needed, the NWDAF can start data collection through a network function (Network Function, NF) (for example, an AMF or a data collection coordination function (Data Collection Coordination Function, DCCF) or an analytics data repository function (Analytics Data Repository Function, ADRF)), or an application program of user equipment (User Equipment, UE, which may also be referred to as a terminal) (through an application function (Application Function, AF) or OAM (operation (Operation), administration (Administration) and maintenance (Maintenance)) to generate an ML model.

If the service invocation is used to modify or cancel a subscription, the NWDAF service consumer includes an identifier (subscription correlation ID), and the identifier is modified when Nnwdaf_MLModelProvision_Subscribe is invoked.

Refer to step 2 in FIG. 2.

If the NWDAF service consumer subscribes to a set of trained ML models associated with a set of analytics IDs, the NWDAF containing the MTLF notifies the NWDAF service consumer of trained "ML model information" (including file addresses of the set of trained ML models) by invoking an Nnwdaf_MLModelProvision_Notify service operation.

When the NWDAF containing the MTLF determines that a previously provided trained ML model needs to be retrained in step 1, the NKDAF containing the MTLF further invokes an NWDAF _MLModelProvision_Notify service operation to notify the ML model available for retraining.

When step 1 is used to modify a subscription (including a subscription correlation ID), the NWDAF containing the MTLF can provide a new to-be-trained ML model different from that provided before, or retrain the ML model by invoking the Nnwdaf_MLModelProvision_Notify service operation.

### 2. Content provided in the ML model

2.1. A consumer of an ML model provision service (that is, the NWDAF containing the AnLF) can provide the following input parameters:
Analytics information related to the requested ML model, including:
(1) Analytics ID list: identifies analytics using the ML model.
(2) (Optional) ML model filter information: allows selection of the ML model requested for analytics, such as single network slice selection assistance information (Single Network Slice Selection Assistance Information, S-NSSAI) and an area of interest.
(3) (Optional) Target of an ML model report: indicates an object requesting the ML model, such as a specific UE, a group of UEs, or any UE (that is, all UEs).
(4) ML model report information with the following parameters:

(Only applicable to Nnwdaf_MLModelProvision_Subscribe) ML model report information parameters determined based on event report information parameters defined in Table 4.15.1-1 in TS 23.502[3].

(Optional) Target periodicity for the ML model: indicates a time interval for requesting the ML model for analytics. The time interval is represented by an actual start time and an actual end time (for example, by the coordinated universal time (Coordinated Universal Time, UTC) time).

TS 23.502[3] A notification destination address (plus a notification correlation ID) defined in Article 4.15.1 allows a notification received from the NWDAF containing the MTLF to be associated with this subscription.

2.2. Output information provided by the NWDAF containing the MTLF to the consumer of the ML model provision service operation is as follows:
(Only applicable to Nnwdaf_MLModelProvision_Notify) Notification related information.

ML model information, including a file address of the ML model with the analytics ID (such as a uniform resource locator (Uniform Resource Locator, URL) or fully qualified domain name (Fully Qualified Domain Name, FQDN)).

(Optional) Validity period: indicates a time period in which the provided ML model information is applicable.

(Optional) Spatial validity: indicates an area in which the provided ML model information is applicable.

A model request method and apparatus, a communication device, and a readable storage medium provided in embodiments of this application are hereinafter described in detail by using some embodiments and application scenarios thereof with reference to the accompanying drawings.

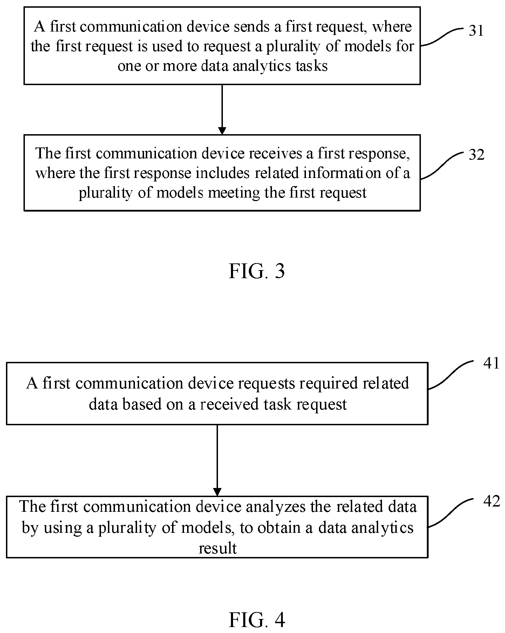

Referring to FIG. 3, an embodiment of this application provides a model request method, including:
Step 31: A first communication device sends a first request, where the first request is used to request a plurality of models for one or more data analytics tasks.
Step 32: The first communication device receives a first response, where the first response includes related information of a plurality of models meeting the first request.

In this embodiment of this application, a plurality of models can be requested from a model transmit end at a time, to reduce signaling consumption in a network.

In this embodiment of this application, optionally, task identifiers of the plurality of data analytics tasks are the same. Optionally, that the task identifiers of the plurality of data analytics tasks are the same means that the plurality of data analytics tasks are of a same type.

In this embodiment of this application, optionally, the first communication device may also be referred to as a model receive end, and may include at least one of the following: a terminal (such as a modem (modem, responsible for networking behaviors such as making calls, surfing the Internet, and sending short messages) in the terminal), an access network element, a core network element, an NWDAF, and an NWDAF containing an AnLF.

In this embodiment of this application, optionally, the first communication device sends the first request to a second communication device and receives the first response sent by the second communication device.

In this embodiment of this application, optionally, the second communication device may be referred to as a model transmit end, and is responsible for model training and distribution, and may include at least one of the following: an access network element (such as a base station or a base station gateway), a core network element, an NWDAF, an NWDAF containing an MTLF, and a third party server.

In this embodiment of this application, optionally, the first request includes at least one of the following:
(1) Task identification information.
   It is used to identify a type of a data analytics task. Optionally, task identifiers of data analytics tasks of a same type are the same.
   The task identification, for example, may be an analytic ID.
(2) Condition restriction information of the task.
   The condition restriction information of the task may also be referred to as analytic filter information (Analytic filter information), and is used to indicate filter information for data analytics results, including, for example, areas of interest (Areas of interest, AOI), single network slice selection assistance information (Single Network Slice Selection Assistance Information, S-NSSAI), and a data network name (Data Network Name, DNN).
(3) Analytics object information of the task.
   The analytics object information of the task may be understood as a target of analytic reporting (Target of analytic reporting), and is used to indicate whether an analytics object of the task is a terminal, a plurality of terminals, or all terminals.
(4) First indication information, where the first indication information is used to indicate that a plurality of models are requested at a time.
   In this embodiment of this application, optionally, the first indication information may appear explicitly, such as a specific information element. Alternatively, the first indication information may appear implicitly. For example, the first indication information is known based on a name of signaling in which the first request is located.
(5) Distinguishing information of the plurality of models.

Optionally, the distinguishing information includes at least one of the following:
accuracy information on a plurality of levels (accuracy level) corresponding to the plurality of models, for example, high, medium, and low accuracy;
information on a plurality of time periods corresponding to the plurality of models, where time period information may appear in a form of a list of time periods of interest (List of time periods of Interest), for example, early, middle, and late time periods;
location information corresponding to the plurality of models, where the location information may also be referred to as area information, which may be a city or cell (cell) range, or the like, and the location information may appear, for example, in a form of an area of interest list (area of interest list) or other forms; and
slice information corresponding to the plurality of models.

The accuracy information may be accuracy, a maximum absolute error (Max absolute error, MAE), precision, or the like.

In this embodiment of this application, optionally, the plurality of models are the same except for the distinguishing information. For example, the plurality of models are a plurality of models with different accuracy, for analyzing a load status of a target network element.

### (6) Model restriction information, used to restrict a scope of use of a model.

Optionally, the model restriction information includes at least one of the following:
location information corresponding to the model; and
slice information corresponding to the model.

The model restriction information is used to help the model transmit end select or train the model. For example, data for training the model needs to be within a location range or a slice.

In this embodiment of this application, optionally, the model restriction information may be obtained based on the condition restriction information of the task. The first request may include only the condition restriction information of the task, or only the model restriction information.

In this embodiment of this application, optionally, before the first communication device sends the first request, the method further includes at least one of the following:
after receiving a task request, the first communication device generates the first request for the task request; and
after receiving a plurality of task requests within a preset time range, the first communication device generates the first request for the plurality of task requests.

The task request is used to request execution of a data analytics task, and the data analytics task related to the first request is obtained based on the data analytics task in the task request, or is the same as the data analytics task in the task request.

Optionally, task identifiers of a plurality of data analytics tasks corresponding to the plurality of task requests are the same. In other words, the plurality of data analytics tasks are of a same task type.

Optionally, the task request includes at least one of the following:
task identification information;
condition restriction information of the task; and
analytics object information of the task.

The condition restriction information of the task may also be referred to as analytic filter information (Analytic filter information), and is used to indicate filter information for data analytics results, including, for example, areas of interest (Areas of interest, AOI), single network slice selection assistance information (Single Network Slice Selection Assistance Information, S-NSSAI), and a data network name (Data Network Name, DNN).

The analytics object information of the task may be understood as a target of analytic reporting (Target of analytic reporting), and is used to indicate whether an analytics object of the task is a terminal, a plurality of terminals, or all terminals.

In this embodiment of this application, optionally, the first communication device receives a task request sent by a third communication device. The third communication device may also be referred to as a data service consumer (Consumer), and may include at least one of the following: an application processor (Application Processor, AP, responsible for an operating system, a user interface, an application program, and the like), and a core network element (such as an AMF or an SMF).

In this embodiment of this application, optionally, the plurality of task requests received by the first communication device may be a plurality of task requests sent by a same third communication device or a plurality of task requests sent by a plurality of third communication devices.

Optionally, the task request may be sent by using Nnwdaf_AnalyticsSubscription_Subscribe.

In this embodiment of this application, optionally, the related information of the model includes at least one of the following:
(1) Model information, which is the model itself or address information of a stored model.
(2) Model identification information.
(3) Model description information, which may also be referred to as model restriction information or the like.
   Optionally, the model description information includes at least one of the following:
   accuracy information corresponding to the model;
   time period information corresponding to the model;
   location information corresponding to the model; and
   slice information corresponding to the model.
(4) Task identification information.
(5) Condition restriction information of the task.
(6) Analytics object information of the task.

Referring to FIG. 4, in this embodiment of this application, optionally, the method further includes:
Step 41: The first communication device requests required related data based on a received task request.
Step 42: The first communication device analyzes the related data by using the plurality of models, to obtain a data analytics result.

In this embodiment of this application, optionally, the first communication device requests the required related data from a fourth communication device. The fourth communication device may also be referred to as a data source, and may include at least one of the following: a core network element (such as an AMF or an SMF), an access network element (such as a base station), and the like.

In this embodiment of this application, optionally, that the first communication device analyzes the related data by using the plurality of models includes: the first communication device analyzes the related data by using different models for different received task requests.

In this embodiment of this application, optionally, after the obtaining a data analytics result, the method further includes: the first communication device sends the data analytics result to a third communication device.

For example, in an embodiment, when UE requests a model or an intelligent related task from the network, for example, when a consumer application APP in the UE sends a task request to a model receive end (such as a modem in the UE), requesting to perform an intelligent task, for example, predicting signal strength at a time or performing decoding/encoding, the model receive end (such as the modem in the UE) sends a first request to a model transmit end (such as a base station), requesting to obtain a plurality of models capable of completing the task; the model transmit end selects models trained internally and meeting the first request, or sends a data request to a data source, requesting to obtain training data for training models, so as to obtain or generate models meeting the first request; the model transmit end returns a plurality of models meeting the first request to the model receive end; and the model receive end can use the models to complete the task requested by the consumer and feed back a result to the consumer.

In another embodiment, when a network element such as a consumer network element SMF or AMF in a core network requests an intelligent related task, the network element sends a task request to a model receive end (such as an NWDAF containing an AnLF), requesting to perform an intelligent task, for example, predicting a network load status at a time; the model receive end sends a first request to a model transmit end (such as an NWDAF containing an MTLF), requesting to obtain a plurality of models that can complete the task; the model transmit end selects models trained internally and meeting the first request, or sends a data request to a data source, requesting to obtain training data for training models, so as to obtain or generate models meeting the first request; the model transmit end returns a plurality of models meeting the first request to the model receive end; and the model receive end can use the models to complete the task requested by the consumer and feed back a result to the consumer.

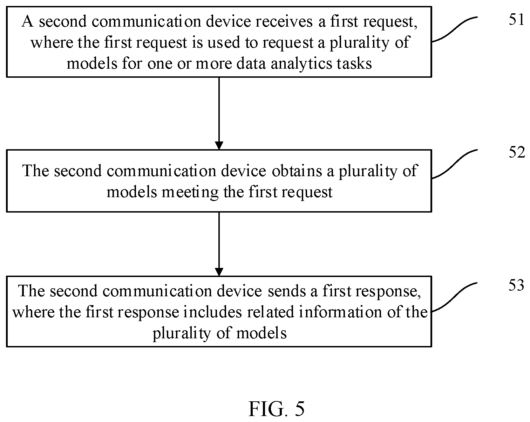

Referring to FIG. 5, an embodiment of this application provides a model request method, including:
Step 51: A second communication device receives a first request, where the first request is used to request a plurality of models for one or more data analytics tasks.
Step 52: The second communication device obtains a plurality of models meeting the first request.
Step 53: The second communication device sends a first response, where the first response includes related information of the plurality of models.

In this embodiment of this application, a plurality of models can be returned to a model receive end at a time, to reduce signaling consumption in a network.

In this embodiment of this application, optionally, task identifiers of the plurality of data analytics tasks are the same.

In this embodiment of this application, optionally, the second communication device may be referred to as a model transmit end, and is responsible for model training and distribution, and may include at least one of the following: an access network element (such as a base station or a base station gateway), a core network element, an NWDAF, an NWDAF containing an MTLF, and a third party server.

In this embodiment of this application, optionally, the second communication device receives the first request sent by a first communication device and sends the first response to the first communication device.

In this embodiment of this application, optionally, the first communication device may also be referred to as a model receive end, and may include at least one of the following: a terminal (such as a modem (modem, responsible for networking behaviors such as making calls, surfing the Internet, and sending short messages) in the terminal), an access network element, a core network element, an NWDAF, and an NWDAF containing an AnLF.

In this embodiment of this application, optionally, the first request includes at least one of the following:
(1) Task identification information.
(2) Condition restriction information of the task.
(3) Analytics object information of the task.
(4) First indication information, where the first indication information is used to indicate that a plurality of models are requested at a time.
(5) Distinguishing information of the plurality of models.
   Optionally, the distinguishing information includes at least one of the following:
   accuracy information on a plurality of levels corresponding to the plurality of models;
   information on a plurality of time periods corresponding to the plurality of models;
   location information corresponding to the plurality of models, where the location information may also be referred to as area information; and
   time period information corresponding to the plurality of models.
(6) Model restriction information, used to restrict a scope of use of a model.

Optionally, the model restriction information includes at least one of the following:
location information corresponding to the model; and
slice information corresponding to the model.

In this embodiment of this application, optionally, that the second communication device obtains a plurality of models meeting the first request includes at least one of the following:
the second communication device obtains stored models meeting the first request; and
the second communication device collects training data based on the first request, and performs model training by using the training data, to obtain trained models.

In this embodiment of this application, optionally, the second communication device may obtain the models meeting the first request from the locally stored models, or may obtain the models meeting the first request from models stored on another communication device (such as an ADRF).

In this embodiment of this application, optionally, the second communication device collects training data from a fifth communication device. The fifth communication device may also be referred to as a data source, and may include at least one of the following: a core network element (such as an AMF or an SMF), an access network element (such as a base station), and the like.

In this embodiment of this application, optionally, that the second communication device obtains stored models meeting the first request includes: the second communication device obtains, based on at least one of the following in the first request, the stored models meeting the first request:
distinguishing information of the plurality of models;
model restriction information, used to restrict a scope of use of a model;
task identification information;
condition restriction information of the task; and
analytics object information of the task.

For example, based on a combination of the distinguishing information of the plurality of models, the model restriction information, and/or the condition restriction information of the task, the second communication device may determine the models meeting the first request. If the used distinguishing information includes accuracy information and time period information, and the model restriction information includes area information, one of the determined models is a model with high accuracy, located in an area of cell 1, and used in a time period from 7:00 to 11:00 every day; another one is a model with medium accuracy, located in an area of cell 1, and used in a time period from 7:00 to 11:00 every day; and another one is a model with low accuracy, located in an area of cell 1, and used in a time period from 7:00 to 11:00 every day.

In this embodiment of this application, optionally, that the second communication device collects training data based on the first request includes: the second communication device collects the training data based on at least one of the following in the first request:
distinguishing information of the plurality of models;
model restriction information, used to restrict a scope of use of a model;
task identification information;
condition restriction information of the task; and
analytics object information of the task.

For example, the second communication device trains, based on the accuracy information in the distinguishing information of the plurality of models in the first request, a model that conforms to the accuracy information.

The second communication device obtains, based on the location information and/or slice information in the model restriction information or the condition restriction information of the task in the first request, training data conforming to the location information and/or slice information, and trains the model.

In this embodiment of this application, optionally, the related information of the model includes at least one of the following:
(1) Model information, which is the model itself or address information of a stored model.
(2) Model identification information.
(3) Model description information.

The model description information is used to describe characteristics of the model. For example, it can be used to describe a scope of use of the model, such as a time period, a location, and slice information thereof, or can be used to describe features of the model, such as accuracy information corresponding to the model.

In other words, the model description information may include at least one of the following:
accuracy information corresponding to the model;
time period information corresponding to the model;
location information corresponding to the model; and
slice information corresponding to the model.

(4) Task identification information.

(5) Condition restriction information of the task.

(6) Analytics object information of the task.

The model request method in the embodiments of this application is hereinafter described by using an example with reference to a specific application scenario.

### Embodiment 1 of this application:

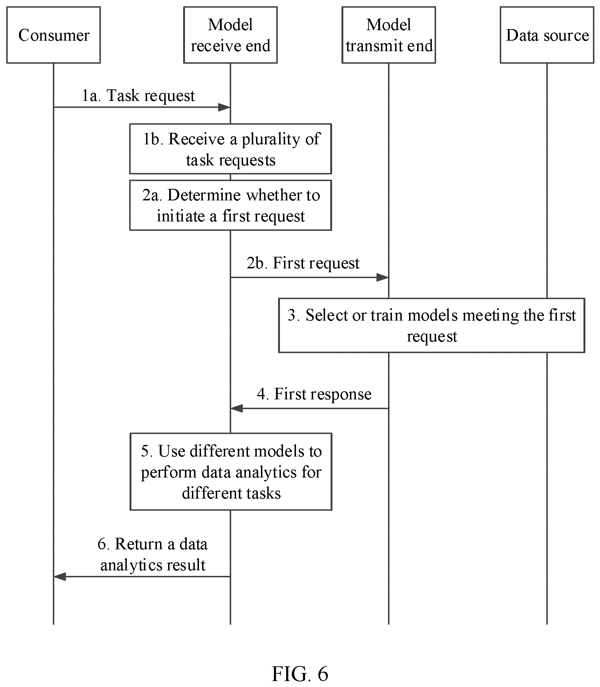

Referring to FIG. 6, the model request method in this embodiment of this application includes the following steps.

Step 1a: Optionally, a consumer (consumer) initiates a task request to a model receive end, requesting to obtain an analytics result of a target task. The task request is used to request a data analytics result, and the task request may include task information (task identification information, condition restriction information of the task, analytics object information of the task, and the like). The task identification information is used to indicate a required data analytics result, where the required data analytics result may be a plurality of data analytics results for a type of task. The condition restriction information of the task indicates filter information for data analytics results, and is used to further define a scope of the task, which may vary depending on different tasks. The filter information may include, for example, at least one of the following: an area range, slice information, an accuracy level, a time, and the like.

Step 1b: Optionally, the model receive end receives a plurality of task requests, where the plurality of task requests may be, for example, a plurality of task requests sent by a consumer, or a plurality of task requests sent by a plurality of consumers.

Step 2a: The model receive end determines whether to initiate a first request for requesting a plurality of models. In an implementation, after receiving one task request, the model receive end may determine to initiate the first request for the task request, for requesting a plurality of models, such as requesting a plurality of related models in advance to avoid a plurality of subsequent model requests and reduce signaling consumption; or the model receive end may receive a plurality of task requests simultaneously or within a preset time range, where task identifiers of a plurality of data analytics tasks corresponding to the plurality of task requests are the same, and the model receive end may initiate a first request for the plurality of task requests, for requesting a plurality of models.

Step 2b: The model receive end sends a first request to a model transmit end, for requesting a plurality of models, so that data analytics can be completed by using the models later.

In this embodiment of this application, optionally, the first request includes at least one of the following:
(1) Task identification information.
(2) Condition restriction information of the task.
(3) Analytics object information of the task.
(4) First indication information, where the first indication information is used to indicate that a plurality of models are requested at a time.
(5) Distinguishing information of the plurality of models.
   Optionally, the distinguishing information includes at least one of the following:
   accuracy information on a plurality of levels corresponding to the plurality of models, for example, high, medium, and low accuracy;
   information on a plurality of time periods corresponding to the plurality of models, for example, early, middle, and late time periods;
   location information corresponding to the plurality of models; and
   slice information corresponding to the plurality of models.
(6) Model restriction information, used to restrict a scope of use of a model.

Optionally, the model restriction information includes at least one of the following:
location information corresponding to the model; and
slice information corresponding to the model.

In this embodiment of this application, if the model receive end is an NWDAF containing an AnLF and the model transmit end is an NWDAF containing an MTLF, when the NWDAF containing the AnLF sends a first request to the NWDAF containing the MTLF, the first request may be sent by using signaling such as Nnwdaf_MLModelInfo_Request or Nnwdaf_MLModelProvision_subscribe.

Step 3: Based on the first request, the model transmit end selects models meeting the first request, or selects a target data source, sends a data request to the target data source to request training data, and uses the training data for model training.

Specifically, the model transmit end may determine a type of to-be-collected training data based on the task information in the first request, then determine the type of a device, and send a data request to the device to request to obtain related training data. If it is determined, based on the task information, that network element load data information needs to be collected, the model transmit end determines to send a data request to a UPF network element to obtain training data (for example, based on internal logic or a preconfiguration). After obtaining the related training data, the model transmit end uses the training data for model training, to obtain models meeting the first request. It is also possible that the model transmit end has stored trained models meeting the first request (for example, the model transmit end has received a similar first request and has generated trained models). In this case, the model transmit end selects the models meeting the first request.

Step 4: The model transmit end sends a first response to the model receive end, where the first response includes a plurality of models meeting the first request, or the model transmit end may send a model itself, such as a file, or storage address information of a model. In addition, the first response may further include model identification information, model description information, and the like.

Step 5: After receiving the plurality of models sent by the model transmit end, the model receive end may use different models for model inference for different task requests (such as the task request received in step 1b). During model inference, the model receive end first requests, from a data source device based on information in the task request, related data (such as input data of the model) required by the model.

Step 6: The model receive end feeds back a data analytics result to the consumer. The data analytics result may be included and used to indicate the analytics result for this task, and content of the data analytics result may vary depending on different tasks. For example, for a network element load task, the data analytics result may be a load status of the target network element sometime in the future. For example, the UPF network element load is high next morning.

The model request method provided in the embodiments of this application may be performed by a model request apparatus. A model request apparatus provided in the embodiments of this application is described by assuming that the model request method is performed by the model request apparatus in the embodiments of this application.

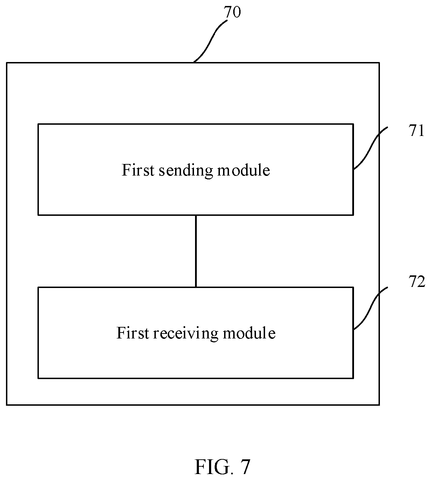

Referring to FIG. 7, an embodiment of this application further provides a model request apparatus 70, including:
a first sending module 71, configured to send a first request, where the first request is used to request a plurality of models for one or more data analytics tasks; and
a first receiving module 72, configured to receive a first response, where the first response includes related information of a plurality of models meeting the first request.

In this embodiment of this application, a plurality of models can be requested from a model transmit end at a time, to reduce signaling consumption in a network.

Optionally, task identifiers of the plurality of data analytics tasks are the same.

Optionally, the first request includes at least one of the following:
task identification information;
condition restriction information of the task;
analytics object information of the task;
first indication information, where the first indication information is used to indicate that a plurality of models are requested at a time;
distinguishing information of the plurality of models; and
model restriction information, used to restrict a scope of use of a model.

Optionally, the distinguishing information includes at least one of the following:
accuracy information on a plurality of levels corresponding to the plurality of models; and
information on a plurality of time periods corresponding to the plurality of models.

Optionally, the model restriction information includes at least one of the following:
location information corresponding to the model; and
slice information corresponding to the model.

Optionally, the model request apparatus 70 further includes at least one of the following:
a first generation module, configured to generate, after a task request is received, the first request for the task request; and
a second generation module, configured to generate, after a plurality of task requests are received within a preset time range, the first request for the plurality of task requests.

Optionally, task identifiers of a plurality of data analytics tasks corresponding to the plurality of task requests are the same.

Optionally, the task request includes at least one of the following:
task identification information;
condition restriction information of the task; and
analytics object information of the task.

Optionally, the related information of the model includes at least one of the following:
model information;
model identification information;
model description information;
task identification information;
condition restriction information of the task; and
analytics object information of the task.

Optionally, the model description information includes at least one of the following:
accuracy information corresponding to the model;
time period information corresponding to the model;
location information corresponding to the model; and
slice information corresponding to the model.

Optionally, the model request apparatus 70 further includes:
a request module, configured to request required related data based on a received task request; and
an analytics module, configured to analyze the related data by using the plurality of models, to obtain a data analytics result.

Optionally, the analytics module is configured to analyze the related data by using different models for different received task requests.

Optionally, the model request apparatus 70 further includes:
a second sending module, configured to send the data analytics result to a third communication device.

The model request apparatus provided in this embodiment of this application can implement each process implemented in the method embodiments in FIG. 3 and FIG. 4, with the same technical effect achieved. To avoid repetition, details are not described herein again.

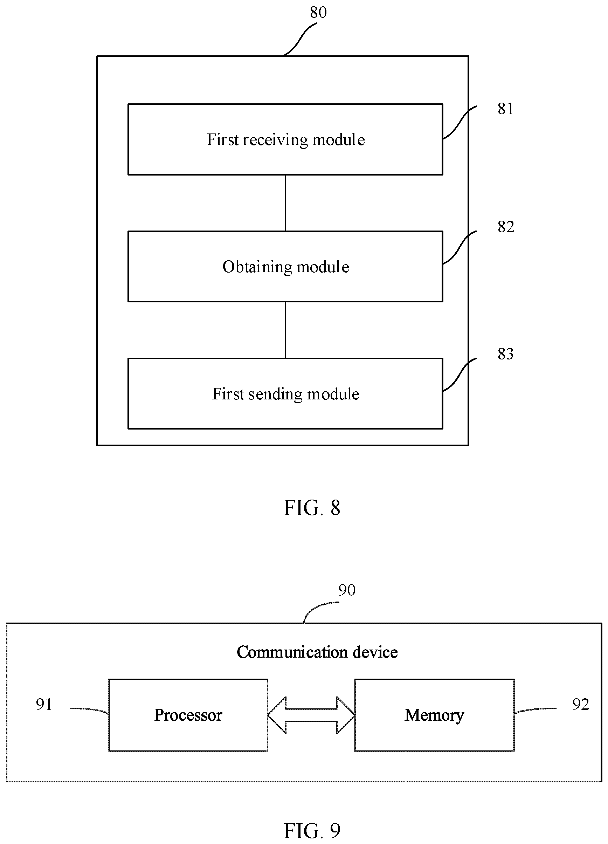

Referring to FIG. 8, an embodiment of this application further provides a model request apparatus 80, including:
a first receiving module 81, configured to receive a first request, where the first request is used to request a plurality of models for one or more data analytics tasks;
an obtaining module 82, configured to obtain a plurality of models meeting the first request; and
a first sending module 83, configured to send a first response, where the first response includes related information of the plurality of models.

In this embodiment of this application, a plurality of models can be returned to a model receive end at a time, to reduce signaling consumption in a network.

Optionally, task identifiers of the plurality of data analytics tasks are the same.

Optionally, the first request includes at least one of the following:
task identification information;
condition restriction information of the task;
analytics object information of the task;
first indication information, where the first indication information is used to indicate that a plurality of models are requested at a time;
distinguishing information of the plurality of models; and
model restriction information, used to restrict a scope of use of a model.

Optionally, the distinguishing information includes at least one of the following:
accuracy information on a plurality of levels corresponding to the plurality of models; and
information on a plurality of time periods corresponding to the plurality of models.

Optionally, the model restriction information includes at least one of the following:
location information corresponding to the model; and
slice information corresponding to the model.

Optionally, the obtaining module 82 is configured to perform at least one of the following:
obtaining stored models meeting the first request; and
collecting training data based on the first request, and performing model training by using the training data, to obtain trained models.

Optionally, the obtaining module 82 is configured to obtain, based on at least one of the following in the first request, the stored models meeting the first request:
distinguishing information of the plurality of models;
model restriction information, used to restrict a scope of use of a model;
task identification information;
condition restriction information of the task; and
analytics object information of the task.

Optionally, the obtaining module 82 is configured to collect the training data based on at least one of the following in the first request:
distinguishing information of the plurality of models;
model restriction information, used to restrict a scope of use of a model;
task identification information;
condition restriction information of the task; and
analytics object information of the task.

Optionally, the related information of the model includes at least one of the following:
the model itself or address information of a stored model;
model identification information;
model description information; and
task information corresponding to the model.

Optionally, the model description information includes at least one of the following:
accuracy information corresponding to the model;
time period information corresponding to the model;
location information corresponding to the model; and
slice information corresponding to the model.

The model request apparatus provided in this embodiment of this application can implement each process implemented in the method embodiment in FIG. 5, with the same technical effect achieved. To avoid repetition, details are not described herein again.

As shown in FIG. 9, an embodiment of this application further provides a communication device 90, including a processor 91 and a memory 92. The memory 92 stores a program or instructions capable of running on the processor 91. For example, when the communication device 90 is a first communication device, and the program or instructions are executed by the processor 91, the steps of the foregoing embodiment of the model request method performed by the first communication device are implemented, with the same technical effect achieved. When the communication device 90 is a second communication device, and the program or instructions are executed by the processor 91, the steps of the foregoing embodiment of the model request method performed by the second communication device are implemented, with the same technical effect achieved. To avoid repetition, details are not described herein again.

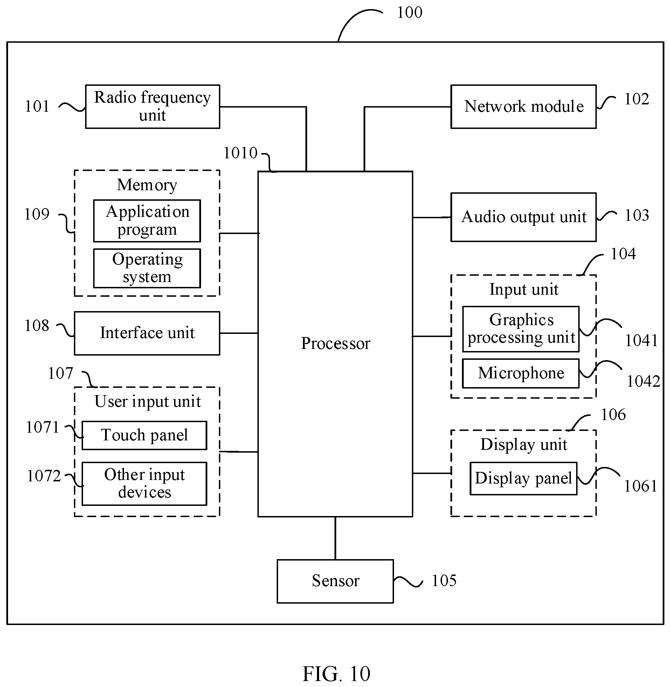

An embodiment of this application further provides a terminal, including a processor and a communication interface. The communication interface is configured to: send a first request, where the first request is used to request a plurality of models for one or more data analytics tasks; and receive a first response, where the first response includes related information of a plurality of models meeting the first request. The terminal embodiment corresponds to the foregoing method embodiment on the first communication device side, and each implementation process and implementation of the foregoing method embodiment can be applied to the terminal embodiment, with the same technical effect achieved. Specifically, FIG. 10 is a schematic diagram of a hardware structure of a terminal for implementing an embodiment of this application.

The terminal 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 1010.

A person skilled in the art may understand that the terminal 100 may further include a power supply (for example, a battery) supplying power to all components. The power supply may be logically connected to the processor 1010 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 may transmit the downlink data to the processor 1010 for processing. In addition, the radio frequency unit 101 may send uplink data to the network-side device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 1010 may include one or more processing units. Optionally, the processor 1010 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1010.

The radio frequency unit 101 is configured to: send a first request, where the first request is used to request a plurality of models for one or more data analytics tasks; and receive a first response, where the first response includes related information of a plurality of models meeting the first request.

In this embodiment of this application, a plurality of models can be requested from a model transmit end at a time, to reduce signaling consumption in a network.

Optionally, task identifiers of the plurality of data analytics tasks are the same.

Optionally, the first request includes at least one of the following:
task identification information;
condition restriction information of the task;
analytics object information of the task;
first indication information, where the first indication information is used to indicate that a plurality of models are requested at a time;
distinguishing information of the plurality of models; and
model restriction information, used to restrict a scope of use of a model.

Optionally, the distinguishing information includes at least one of the following:
accuracy information on a plurality of levels corresponding to the plurality of models; and
information on a plurality of time periods corresponding to the plurality of models.

Optionally, the model restriction information includes at least one of the following:
location information corresponding to the model; and
slice information corresponding to the model.

Optionally, the processor 1010 is configured to: after receiving a task request, generate the first request for the task request; and/or after receiving a plurality of task requests within a preset time range, generate the first request for the plurality of task requests.

Optionally, task identifiers of a plurality of data analytics tasks corresponding to the plurality of task requests are the same.

Optionally, the task request includes at least one of the following:
task identification information;
condition restriction information of the task; and
analytics object information of the task.

Optionally, the related information of the model includes at least one of the following:
model information;
model identification information;
model description information;
task identification information;
condition restriction information of the task; and
analytics object information of the task.

Optionally, the model description information includes at least one of the following:
accuracy information corresponding to the model;
time period information corresponding to the model;
location information corresponding to the model; and
slice information corresponding to the model.

Optionally, the processor 1010 is configured to: request required related data based on a received task request; and analyze the related data by using the plurality of models, to obtain a data analytics result.

Optionally, the processor 1010 is configured to analyze the related data by using different models for different received task requests.

Optionally, the radio frequency unit 101 is further configured to send the data analytics result to a third communication device.

An embodiment of this application further provides a network-side device, including a processor and a communication interface. The communication interface is configured to: send a first request, where the first request is used to request a plurality of models for one or more data analytics tasks; and receive a first response, where the first response includes related information of a plurality of models meeting the first request. The network-side device embodiment corresponds to the foregoing method embodiment on the second communication device side, and each implementation process and implementation of the foregoing method embodiment can be applied to the network-side device embodiment, with the same technical effect achieved.

An embodiment of this application further provides a network-side device, including a processor and a communication interface. The communication interface is configured to: receive a first request, where the first request is used to request a plurality of models for one or more data analytics tasks; the processor is configured to obtain a plurality of models meeting the first request; and the communication interface is further configured to send a first response, where the first response includes related information of the plurality of models. The network-side device embodiment corresponds to the foregoing method embodiment on the second communication device side, and each implementation process and implementation of the foregoing method embodiment can be applied to the network-side device embodiment, with the same technical effect achieved.

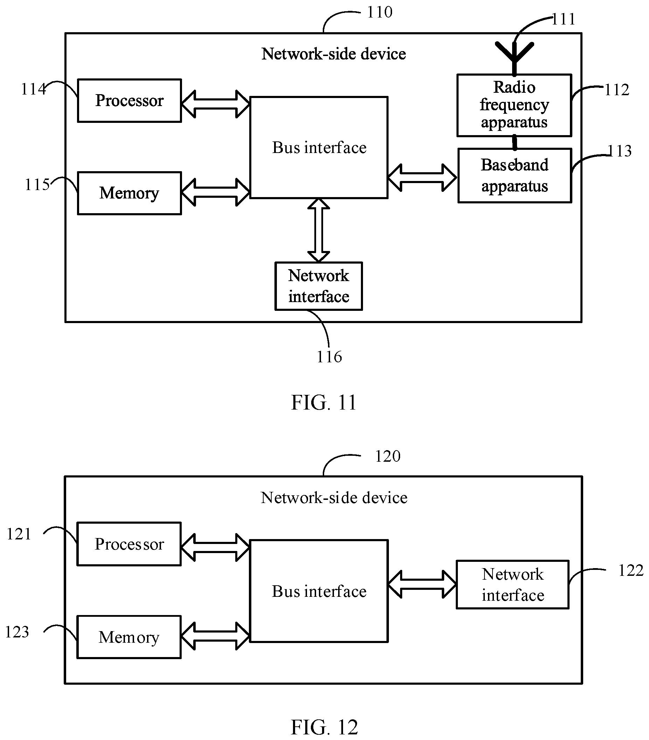

Specifically, an embodiment of this application further provides a network-side device. As shown in FIG. 11, the network-side device 110 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out by using the antenna 111.

The method performed by the network-side device in the foregoing embodiment may be implemented in the baseband apparatus 113. The baseband apparatus 113 includes a baseband processor.

The baseband apparatus 113 may include, for example, at least one baseband unit, where a plurality of chips are disposed on the baseband unit. As shown in FIG. 11, one of the chips is, for example, the baseband processor, connected to the memory 115 by using a bus interface, to invoke a program in the memory 115 to perform the operation of the network device shown in the foregoing method embodiment.

The network-side device may further include a network interface 116, where the interface is, for example, a common public radio interface (common public radio interface, CPRI).

Specifically, the network-side device 110 in this embodiment of this application further includes a program or instructions stored in the memory 115 and capable of running on the processor 114. When the processor 114 invokes the program or instructions in the memory 115, the method performed by each module shown in FIG. 7 or FIG. 8 is performed, with the same technical effect achieved. To avoid repetition, details are not described herein again.

Specifically, an embodiment of this application further provides a network-side device. As shown in FIG. 12, the network-side device 120 includes a processor 121, a network interface 122, and a memory 123. The network interface 122 is, for example, a common public radio interface (common public radio interface, CPRI).

Specifically, the network-side device 120 in this embodiment of this application further includes a program or instructions stored in the memory 123 and capable of running on the processor 121. When the processor 121 invokes the program or instructions in the memory 123, the method performed by each module shown in FIG. 7 or FIG. 8 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the model request method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the model request method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the model request method, with the same technical effect achieved. To avoid repetition, details are not described herein again.

An embodiment of this application further provides a communication system, including a first communication device and a second communication device. The first communication device may be configured to perform the steps of the foregoing model request method performed by the first communication device. The second communication device may be configured to perform the steps of the foregoing model request method performed by the second communication device.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A model request method, comprising:
sending, by a first communication device, a first request, wherein the first request is used to request a plurality of models for one or more data analytics tasks; and
receiving, by the first communication device, a first response, wherein the first response comprises related information of a plurality of models meeting the first request.

2. The method according to claim 1, wherein task identifiers of the plurality of data analytics tasks are the same.

3. The method according to claim 1, wherein the first request comprises at least one of the following:
task identification information;
condition restriction information of the task;
analytics object information of the task;
first indication information, wherein the first indication information is used to indicate that a plurality of models are requested at a time;
distinguishing information of the plurality of models; and
model restriction information, used to restrict a scope of use of a model.

4. The method according to claim 3, wherein the distinguishing information comprises at least one of the following:
accuracy information on a plurality of levels corresponding to the plurality of models; and
information on a plurality of time periods corresponding to the plurality of models.

5. The method according to claim 3, wherein the model restriction information comprises at least one of the following:
location information corresponding to the model; and
slice information corresponding to the model.

6. The method according to claim 1, wherein before the sending, by a first communication device, a first request, the method further comprises at least one of the following:
after receiving a task request, generating, by the first communication device, the first request for the task request; and
after receiving a plurality of task requests within a preset time range, generating, by the first communication device, the first request for the plurality of task requests.

7. The method according to claim 6, wherein task identifiers of a plurality of data analytics tasks corresponding to the plurality of task requests are the same.

8. The method according to claim 6, wherein the task request comprises at least one of the following:
task identification information;
condition restriction information of the task; and
analytics object information of the task.

9. The method according to claim 1, wherein the related information of the model comprises at least one of the following:
model information;
model identification information;
model description information;
task identification information;
condition restriction information of the task; and
analytics object information of the task.

10. The method according to claim 9, wherein the model description information comprises at least one of the following:
accuracy information corresponding to the model;
time period information corresponding to the model;
location information corresponding to the model; and
slice information corresponding to the model.

11. The method according to claim 1, further comprising:
requesting, by the first communication device, required related data based on a received task request; and
analyzing, by the first communication device, the related data by using the plurality of models, to obtain a data analytics result.

12. The method according to claim **11,** wherein after the obtaining a data analytics result, the method further comprises:
sending, by the first communication device, the data analytics result to a third communication device.

13. A model request method, comprising:
receiving, by a second communication device, a first request, wherein the first request is used to request a plurality of models for one or more data analytics tasks;
obtaining, by the second communication device, a plurality of models meeting the first request; and
sending, by the second communication device, a first response, wherein the first response comprises related information of the plurality of models.

14. The method according to claim 13, wherein task identifiers of the plurality of data analytics tasks are the same.

15. The method according to claim 13, wherein the first request comprises at least one of the following:
task identification information;
condition restriction information of the task;
analytics object information of the task;
first indication information, wherein the first indication information is used to indicate that a plurality of models are requested at a time;
distinguishing information of the plurality of models; and
model restriction information, used to restrict a scope of use of a model.

16. The method according to claim 15, wherein the distinguishing information comprises at least one of the following:
accuracy information on a plurality of levels corresponding to the plurality of models; and
information on a plurality of time periods corresponding to the plurality of models.

17. The method according to claim 15, wherein the model restriction information comprises at least one of the following:
location information corresponding to the model; and
slice information corresponding to the model.

18. The method according to claim 13, wherein the obtaining, by the second communication device, a plurality of models meeting the first request comprises at least one of the following:
obtaining, by the second communication device, stored models meeting the first request; and
collecting, by the second communication device, training data based on the first request, and performing model training by using the training data, to obtain trained models.

19. The method according to claim 18, wherein the obtaining, by the second communication device, stored models meeting the first request comprises:
obtaining, by the second communication device based on at least one of the following in the first request, the stored models meeting the first request:
distinguishing information of the plurality of models;
model restriction information, used to restrict a scope of use of a model;
task identification information;
condition restriction information of the task; and
analytics object information of the task.

20. The method according to claim 18, wherein the collecting, by the second communication device, training data based on the first request comprises:
collecting, by the second communication device, the training data based on at least one of the following in the first request:
distinguishing information of the plurality of models;
model restriction information, used to restrict a scope of use of a model;
task identification information;
condition restriction information of the task; and
analytics object information of the task.

21. The method according to claim 13, wherein the related information of the model comprises at least one of the following:
model information;
model identification information;
model description information;
task identification information;
condition restriction information of the task; and
analytics object information of the task.

22. The method according to claim 21, wherein the model description information comprises at least one of the following:
accuracy information corresponding to the model;
time period information corresponding to the model;
location information corresponding to the model; and
slice information corresponding to the model.

23. A model request apparatus, comprising:
a first sending module, configured to send a first request, wherein the first request is used to request a plurality of models for one or more data analytics tasks; and
a first receiving module, configured to receive a first response, wherein the first response comprises related information of a plurality of models meeting the first request.

24. A model request apparatus, comprising:
a first receiving module, configured to receive a first request, wherein the first request is used to request a plurality of models for one or more data analytics tasks;
an obtaining module, configured to obtain a plurality of models meeting the first request; and
a first sending module, configured to send a first response, wherein the first response comprises related information of the plurality of models.

25. A communication device, comprising a processor and a memory, wherein the memory stores a program or instructions capable of running on the processor, and when the program or instructions are executed by the processor, the steps of the model request method according to any one of claims 1 to 12 are implemented, or when the program or instructions are executed by the processor, the steps of the model request method according to any one of claims 13 to 22 are implemented.

26. A readable storage medium, wherein the readable storage medium stores a program or instructions, and when the program or instructions are executed by a processor, the steps of the model request method according to any one of claims 1 to 12 are implemented, or the steps of the model request method according to any one of claims 13 to 22 are implemented.
